# EUROPEAN PATENT SPECIFICATION

(11) **EP 2 316 602 B1**
(45) Date of publication and mention of the grant of the patent: **08.04.2015**
(21) Application number: 10014196.9
(22) Date of filing: 02.11.2010
(51) Int. Cl.: B23D 47/04, B27B 5/065

(54) **Panel cutting machine**
Plattenaufteilanlage
Machine à couper des panneaux

(30) Priority: 03.11.2009 IT BO20090718
(43) Date of publication of application: 04.05.2011
(73) Proprietor: Naldi, Valter, 40137 Bologna (IT)
(72) Inventor: Naldi, Valter, 40137 Bologna (IT)

(56) References cited:
- EP-A1- 1 510 276
- EP-A1- 1 964 653
- EP-A2- 2 111 939

## Description

The present invention relates to an innovative cutting machine as per the preamble of claim 1. Such a machine is known from EP-A2-2 111 939.

Patent application EP-A1-1 964 653 (HOLZMA) describes a cutting machine that uses simultaneously a main pushing system and a secondary pushing system to execute different cutting patterns on two different stacks of panels.

In particular, in this solution both pushing systems are guided and supported by a common lateral beam perpendicular to cutting line and positioned immediately to its side.

However, while the main pushing system, thanks to its portal structure, is properly guided and supported at its ends on the outside of the cutting line, the secondary pushing system does not present the same characteristics.

In fact, the secondary pushing system panel positioning grippers act on the internal side of the cutting line, making the whole system work cantilevered with obvious mechanical and accuracy problems.

In order to limit accuracy problems, this secondary pushing system uses a single gripper on the internal side of the cutting line with the result of greatly reducing the executable cutting patterns and the width of the single stack of panels that can be pushed by the same secondary pushing system.

In other solutions, already on the market, main and secondary pushing systems are supported and guided by a third central common beam over and above to the two obvious guiding beams, one for each system, positioned at the two ends of the cutting line. In this way the width of the secondary portal pushing system can be choosen in relation to the needs of the various cutting patterns, making the guiding and supporting means adequate to the required accuracy during cutting of stacks of panels.

However, this solution is expensive since the third central guiding beam, in order to be supported at its ends, needs a further beam structure because the underlying area is occupied by panels being machined on the cutting line. Moreover, since beam dimensions can exceed 6-8 meters, it can be easily understood how such a structure can negatively influence final machine cost.

In another solution present on the market, each pushing system is supported and guided by single beams positioned at the centre of the same pushing systems therefore assuring the necessary accuracy to their movements. This solution as well needs the costly beam structure to support the single guiding beams at their ends, and when they exceed certain lengths, also at their centre.

The main object of present invention is therefore that of providing a cutting machine in which the guiding and supporting means are simple and economic.

The present invention relates to a cutting machine whose guiding and supporting structure of pushing systems comprises at one end a lateral beam to support and guide both systems. The lateral supporting and guiding beam protrudes inside the working area common to both pushing systems. Moreover, the overhanging beam width beyond the square fence and inside the working area is such to cover, in a plan view, at least one of the grippers of the secondary pushing system. In other words, the width of at least one of the grippers of the secondary system is smaller or at least equal to the width of the supporting side beam protruding over the square fence and inside the working area.

Accordingly, the present invention provides a cutting machine comprising the combination of features of claim 1. Preferred embodiments of the invention are disclosed in any one of the directly or indirectly depending claims.

For a better understanding of the present invention a preferred embodiment will be now described as a non limiting example in reference to the enclosed drawings in which:
- figure 1 shows a plan view of a cutting machine in accordance with the present invention; and
- figure 2 shows a cross section A-A executed on a plan view of figure 1.

Number 10 in enclosed figures indicates as a whole a cutting machine in accordance with the present invention.

Cutting machine 10 comprises a support 50 of a main pushing system 100 and of a secondary pushing system 200. Support structure 50 is substantially symmetric in respect to a central longitudinal axis (X).

Support structure 50 comprises, in turn, two lateral beams 51, 52 supported by four angular pillars 53, 54, 55, 56. As a rule in general, the two lateral beams 51, 52 may have different widths.

Side beam 52, when extremely long, may be further supported by a pillar 57 positioned roughly at its center.

Pillars or supports 55 and 56 are positioned at the two ends of a cutting line (LT) and could be included as part of the cutting line machine base support (M1) e (M2). Supports (M1) e (M2) are the normal supports, at one end, of support structure 50, and therefore do not further increase the overall cutting machine cost.

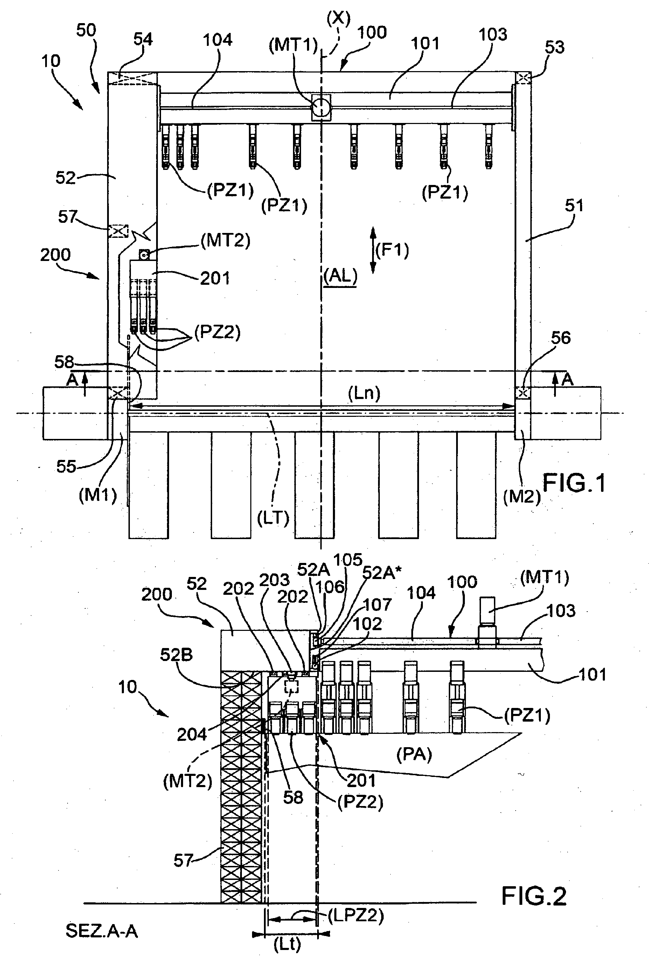

In the present context, length (Ln) of cutting line (LT) is defined as the distance from square fence 58, placed in correspondance of support (M1), to support (M2). Moreover, as shown in figure 1, working area (AL) has, in a plan view, same width (Ln) of cutting line (LT), and same length of pushing systems 100, 200 useful stroke.

Side beam 52 has an overall width such that it can be mounted overhanging by a useful width (Lt) beyond square fence 58 and inside working area (AL).

Therefore, in the present context, useful width (Lt) represents beam 52 useful cross side dimension overhanging above working area (AL) on the inner side of square fence 58.

The main pushing system, of known type, is constituted by a central carriage 101 able to move on fixed guides 102 (only one is visible in enclosed figures) mounted on beams 51, 52 according to directions defined by double pointed arrow (F1), parallel to axis (X) and orthogonal to cutting line (LT).

Moreover, main pushing system 100, includes driving means (MT1) and two transmission shafts 103, 104. In particular, as shown in figure 2, each transmission shaft 103, 104, ends up with a respective pinion 105 (only one is visible in enclosed figures) coupled with a respective rack 106 (only one is visible in enclosed figures). Central carriage 101 is supported on fixed guides 102 by means of driving rollers 107 (only one is visible in enclosed figures).

Main pushing system 100 is provided with grippers (PZ1) for clamping, pushing and positioning to measure of a first stack of panels (not shown). Grippers (PZ1), of a known type, are individually raisable, as a function of the work cycle to be executed on first stack of panels (not shown). Each gripper (PZ1) is housed in a respective groove (not shown) provided on supporting table (PA) (figure 2) of working area (AL).

As evident from figure 2, a pinion 105 with respective rack 106, and a fixed guide 102 with respective driving roller 107, are all being supported by a vertical face 52A of beam 52. Or we can better say that those items are contained in a longitudinal gap 52A* obtained on vertical face 52A for the entire length of beam 52. Therefore on vertical face 52A of beam 52, at least a portion of main pushing system 100 weight is applied.

Moreover, carriage 101 guiding and driving system on beam 52, is evidently positioned above and inside work area (AL).

Cutting machine 10, also comprises a secondary pushing system 200, positioned laterally with respect to main pushing system 100. Secondary pushing system 200, in turn, foresees a lateral carriage 201 able to move on fixed guides 202.

Moreover, secondary pushing system 200, comprises driving means (MT2) to drive a pinion 203, coupled with a rack 204 (figure 2). Lateral carriage 201, is also able to move along directions defined in accordance with double pointed arrow (F1) in a totally independent manner in respect to carriage 101 of main pushing system 100.

Also lateral carriage 201 is provided with a plurality of grippers (PZ2) to clamp and transport to measure a second stack of panels (not shown) that can be cut simultaneously and independently from a first stack of panels (not shown) being moved with grippers (PZ1) of first pushing system 100. In this case too, grippers (PZ2), of known type, are individually raisable as a function of work cycle to be executed on second stack of panels (not shown). Each gripper (PZ2) is housed in a relative groove (not shown) provided on support table (PA) of work area (AL).

In the shown solution, total width (LPZ2) of all grippers (PZ2) associated with lateral carriage 201, is smaller, or at least equal, to width (Lt) of lateral beam 52.

In the present context, the terms (PZ1) and (PZ2) are referred to either panel clamping means or panel pushing means, both of known type.

Fixed guides 202, pinion 203 and rack 204, are all supported by a horizontal face 52B of beam 52. On this horizontal face 52B all the weight of secondary pushing system 200 is completely applied.

It is therefore evident that on beam 52 all the weight of secondary pushing system 200 is completely applied.

Faces 52A and 52B are orthogonal between each other and secondary pushing system 200 guides 202 are conveniently positioned above and on the inner side of work area (AL) in such a way to allow an efficient guiding and support of carriage 201 and also a convenient positioning of possible pillar 57.

Alternatively, pushing system 200 guides, can be positioned on the two extreme sides of the face 52B of beam 52. In this case pillar 57, if eventually needed, could be positioned and fixed on external vertical face of beam 52 opposite to vertical face 52A.

In an embodiment not shown, portion 52 of support structure 50 to support and guide both carriages 101, 201, is constituted by two beams, or portions of beams, placed side by side, or in any case close to each other, and eventually mechanically connected so as to form a single unit at least supported by pillars 54, 55 and eventually by pillar 57.

In a further embodiment, not shown, a third pushing system is provided, in all aspect similar to secondary pushing system 200, supported by lateral beam 51.

The main advantage of the cutting machine in accordance with the present invention is that secondary pushing system carriage is supported and guided immediately close to where load, constituted by the weight of the panels, is applied. A further economical advantage is derived from the fact that the carriage dimension and its relative guides and guide pads are of a reduced dimension, the load being immediately next to them. All of this makes the overall cost of secondary pushing system, in accordance with the present invention, much lower than traditional systems as for example the one that uses an overhanging carriage. The use of the third central beam common to both pushing systems typical of certain previous solutions, is also avoided.

## Claims

1. Panel cutting machine (10) comprising a support structure (50) to support a main pushing system (100), in turn comprising pushing and/or clamping means (PZ1), and a secondary pushing system (200), in turn comprising pushing and/or clamping means (PZ2); the main pushing system (100) and the secondary pushing system (200) operating independently from each other and both acting on the same working area (AL) and on the same cutting line (LT); panel sizing machine (10) **characterized** by comprising that pushing and/or clamping means (PZ2) relative to said secondary pushing system (200) are , at least partially, comprised sideways in a useful overall dimension (Lt) protruding beyond a square fence (58) above and inside the working area (AL) of a portion (52) of said support structure (50); said portion (52) of said support structure (50) acting as support and guide for said pushing systems (100), (200).

2. Panel cutting machine (10), as claimed in claim 1, **characterized by** comprising that pushing and/or clamping means (PZ2) relative to said secondary pushing system (200) are all comprised sideways in a useful overall dimension (Lt) protruding beyond the square fence (58) above and inside the working area (AL) of a portion (52) of said support structure (50); said portion (52) of said support structure (50) acting as support and guide for said pushing systems (100), (200).

3. Panel cutting machine (10), as claimed in any one of the preceding claims, **characterized by** comprising that the whole weight of said secondary pushing system (200) is loaded onto said portion (52) of said support structure (50).

4. Panel cutting machine (10), as claimed in any one of the preceding claims, **characterized by** comprising that at least a portion of the weight of said main pushing system (100) is loaded onto said portion (52) of said support structure (50).

5. Panel cutting machine (10), as claimed in any one of the preceding claims, **characterized by** comprising that said portion (52) is constituted by a single beam (52).

6. Panel cutting machine (10), as claimed in any one of the preceding claims 1-4, **characterized by** comprising that said support portion (52) is constituted by at least two beams, or portions of beams, next to each other eventually mechanically connected.

7. Panel cutting machine (10), as claimed in any one of the preceding claims, **characterized by** comprising that said portion (52) is resting on at least two terminal supports (54, 55).

8. Panel cutting machine (10), as claimed in claim 7, **characterized by** comprising that the terminal support (55) is included in a support (M1) of the machine base of said cutting line (LT).

9. Panel cutting machine (10), as claimed in any one of the preceding claims, **characterized by** comprising that at least one of the guides of said main pushing system (100) on the support portion (52) is located above and on the inner side of the working area (AL).

10. Panel cutting machine (10), as claimed in any one of the preceding claims, **characterized by** comprising that at least one of the guides of said secondary pushing system (200) on the support portion (52) is located above and on the inner side of the working area (AL).

11. Panel cutting machine (10), as claimed in any one of the preceding claims, **characterized by** comprising that the guiding system of said secondary pushing system (200) on the support portion (52) is located above and on the inner side of the working area (AL).

12. Panel cutting machine (10), as claimed in any one of the preceding claims, **characterized by** comprising that secondary pushing system (200) is provided with a carriage (201) able to move on fixed guides (202) located on the support portion (52) of support structure (50); said carriage (201), in turn, is provided with pushing and/or clamping means (PZ2).

13. Panel cutting machine (10), as claimed in any one of the preceding claims, **characterized by** comprising that secondary pushing system (200) is provided with pushing and/or clamping means (PZ2) to clamp and transport to measure a second stack of panels that can be cut simultaneously and independently from a first stack of panels being moved with pushing and/or clamping means (PZ1) of first pushing system (100).

14. Panel cutting machine (10), as claimed in any one of the preceding claims, **characterized by** comprising that pushing and/or clamping means (PZ1) relative to first pushing system (100), are individually raisable, as a function of the work cycle to be executed on first stack of panels.

15. Panel cutting machine (10), as claimed in any one of the preceding claims, **characterized by** comprising that pushing and/or clamping means (PZ2) relative to secondary pushing system (200), are individually raisable, as a function of the work cycle to be executed on second stack of panels.

## Patentansprüche

1. Zuschnittmaschine (10) für Platten mit einem Gestell (50), das als Halterung eines Hauptschiebesystems (100) geeignet ist, welches seinerseits Schiebe- und/oder Greifmittel (PZ1) sowie ein Nebenschiebesystem (200) aufweist, welch letzteres auch seinerseits wiederum Schiebe- und/oder Greifmittel (PZ2) aufweist, wobei das Hauptschiebesystem (100) und Nebenschiebesystem (200) voneinander unabhängig und beide in demselben Arbeitsbereich (AL) und entlang derselben Schnittlinie (LT) operativ sind;
Zuschnittmaschine (10), **dadurch gekennzeichnet, dass** besagte Schiebe- und/oder Greifmittel (PZ2) des besagten Nebenschiebesystems (200) wenigstens teilweise in einer nützlichen transversalen Größendimension (Lt) eines Teils (52) des besagten Gestells (50) enthalten sind, das über einen Winkel (58) ober- und innerhalb des Arbeitsbereiches (AL) hinausragt, wobei besagter Teil (52) des besagten Gestells (50) als Halterung und Führung besagter Schiebesysteme (100), (200) fungieren kann.

2. Zuschnittmaschine (10) für Platten nach Anspruch 1, **dadurch gekennzeichnet, dass** die Schiebe- und/oder Greifmittel (PZ2) des besagten Nebenschiebesystems (200) sämtlich in einer nützlichen transversalen Größendimension (Lt) eines Teils (52) des besagten Gestells (50) enthalten sind, das über einen Winkel (58) ober- und innerhalb des Arbeitsbereiches (AL) hinausragt, wobei besagter Teil (52) des besagten Gestells (50) als Halterung und Führung besagter Schiebesysteme (100), (200) fungieren kann.

3. Zuschnittmaschine (10) für Platten, nach einem der vorhergehenden Ansprüche, **dadurch gekennzeichnet, dass** das gesamte Gewicht des besagten Nebenschiebesystems (200) auf dem besagten Teil (52) des besagten Gestells (50) ruht.

4. Zuschnittmaschine (10) für Platten, nach einem der vorhergehenden Ansprüche, **dadurch gekennzeichnet, dass** wenigstens ein Teil des Gewichts des besagten Hauptschiebesystems (100) auf besagtem Teil (52) des besagten Gestells (50) ruht.

5. Zuschnittmaschine (10) für Platten, nach einem der vorhergehenden Ansprüche, **dadurch gekennzeichnet, dass** besagter Teil (52) aus einem einzigen Träger (52) besteht.

6. Zuschnittmaschine (10) für Platten, nach einem der vorhergehenden Ansprüche 1 bis 4, **dadurch gekennzeichnet, dass** besagter Halterungsteil (52) wenigstens zwei Träger oder Teile von Trägern aufweist, die nebeneinander liegen und eventuell mechanisch miteinander verbunden sind.

7. Zuschnittmaschine (10) für Platten, nach einem der vorhergehenden Ansprüche, **dadurch gekennzeichnet, dass** besagter Teil (52) auf wenigstens zwei Endhalterungen (54, 55) aufgelagert ist.

8. Zuschnittmaschine (10) für Platten nach Anspruch 7, **dadurch gekennzeichnet, dass** die Endhalterung (55) in einem Ständer (M1) eines Untergestells der besagten Schnittlinie (LT) enthalten ist.

9. Zuschnittmaschine (10) für Platten, nach einem der vorhergehenden Ansprüche, **dadurch gekennzeichnet, dass** wenigstens eine von den Führungen des besagten Hauptschiebesystems (100) auf dem Halterungsteil (52) oberhalb und Innerhalb des Arbeitsbereichs (AL) angebracht ist.

10. Zuschnittmaschine (10) für Platten, nach einem der vorhergehenden Ansprüche, **dadurch gekennzeichnet, dass** wenigstens eine von den Führungen des besagten Nebenschiebesystems (200) auf dem Halterungsteil (52) oberhalb und innerhalb des Arbeitsbereichs (AL) angebracht ist.

11. Zuschnittmaschine (10) für Platten, nach einem der vorhergehenden Ansprüche, **dadurch gekennzeichnet, dass** das Führungssystem des besagten Nebenschiebesystems (200) auf dem Halterungsteil (52) oberhalb und innerhalb des Arbeitsbereichs (AL) angebracht ist.

12. Zuschnittmaschine (10) für Platten, nach einem der vorhergehenden Ansprüche, **dadurch gekennzeichnet, dass** das Hauptschiebesystem (200) mit einem auf dem Halterungsteil (52) des Gestells (50) auf festen Laufschienen (202) verfahrbaren Schlitten (201) versehen ist, wobei besagter Schlitten (201) seinerseits mit Schiebe- und/oder Greifmitteln (PZ2) versehen ist.

13. Zuschnittmaschine (10) für Platten, nach einem der vorhergehenden Ansprüche, **dadurch gekennzeichnet, dass** das Nebenschiebesystem (200) mit Schiebe- und/oder Greifmitteln (PZ2) zur maßgerechten Fixierung und Beförderung eines zweiten Plattenpakets versehen ist, das gleichzeitig mit und unabhängig von einem ersten, mit Schiebe- und/oder Greifmitteln (PZ1) des ersten Schiebesystems (100) bewegten Plattenpaket zugeschnitten werden kann.

14. Zuschnittmaschine (10) für Platten, nach einem der vorhergehenden Ansprüche, **dadurch gekennzeichnet, dass** die Schiebe- und/oder Greifmittel (PZ1) des ersten Schiebesystems (100) je nach dem am ersten Plattenpaket auszuführenden Arbeitszyklus einzeln angehoben werden können.

15. Zuschnittmaschine (10) für Platten, nach einem der vorhergehenden Ansprüche, **dadurch gekennzeichnet, dass** die Schiebe- und/oder Greifmittel (PZ2) des zweiten Schiebesystems (200) je nach dem am zweiten Plattenpaket auszuführenden Arbeitszyklus einzeln angehoben werden können.

## Revendications

1. Machine de coupe de panneaux (10) comprenant une structure de support (50) pour supporter un système de poussée principal (100), comprenant à son tour des moyens de poussée et/ou de serrage (PZ1), et un système de poussée secondaire (200), comprenant à son tour des moyens de poussée et/ou de serrage (PZ2) ; le système de poussée principal (100) et le système de poussée secondaire (200) fonctionnant indépendamment l'un de l'autre et les deux agissant sur la même zone de travail (AL) et sur la même ligne de coupe (LT) ; une machine de dimensionnement de panneaux (10) **caractérisée en ce que** les moyens de poussée et/ou de serrage (PZ2) par rapport audit système de poussée secondaire (200) sont, au moins partiellement, compris latéralement dans une dimension totale utile (Lt) faisant saillie au-delà d'une barre d'appui carrée (58) au-dessus et à l'intérieur de la zone de travail (AL) d'une partie (52) de ladite structure de support (50) ; ladite partie (52) de ladite structure de support (50) servant de support et de guidage pour lesdits systèmes de poussée (100), (200).

2. Machine de coupe de panneaux (10) selon la revendication 1, **caractérisée en ce que** les moyens de poussée et/ou de serrage (PZ2) par rapport audit système de poussée secondaire (200) sont tous compris latéralement dans une dimension totale utile (Lt) faisant saillie au-delà de la barre d'appui carrée (58) au-dessus et à l'intérieur de la zone de travail (AL) d'une partie (52) de ladite structure de support (50) ; ladite partie (52) de ladite structure de support (50) servant de support et de guidage pour lesdits systèmes de poussée (100), (200).

3. Machine de coupe de panneaux (10) selon une quelconque des revendications précédentes, **caractérisée en ce que** le poids total dudit système de poussée secondaire (200) est chargé sur ladite partie (52) de ladite structure de support (50).

4. Machine de coupe de panneaux (10) selon une quelconque des revendications précédentes, **caractérisée en ce qu'**au moins une partie du poids dudit système de poussée principal (100) est chargée sur ladite partie (52) de ladite structure de support (50).

5. Machine de coupe de panneaux (10) selon une quelconque des revendications précédentes, **caractérisée en ce que** ladite partie (52) est constituée par une poutre unique (52).

6. Machine de coupe de panneaux (10) selon une quelconque des revendications précédentes 1 à 4, **caractérisée en ce que** ladite partie de support (52) est constituée par au moins deux poutres, ou parties de poutres, l'une à côté de l'autre, finissant par être raccordées mécaniquement.

7. Machine de coupe de panneaux (10) selon une quelconque des revendications précédentes, **caractérisée en ce que** ladite partie (52) repose sur au moins deux supports terminaux (54, 55).

8. Machine de coupe de panneaux (10) selon la revendication 7, **caractérisée en ce que** le support terminal (55) est inclus dans un support (M1) de la base de machine de ladite ligne de coupe (LT).

9. Machine de coupe de panneaux (10) selon une quelconque des revendications précédentes, **caractérisée en ce qu'**au moins un des guidages dudit système de poussée principal (100) sur la partie de support (52) est situé au-dessus du, et sur le, côté intérieur de la zone de travail (AL).

10. Machine de coupe de panneaux (10) selon une quelconque des revendications précédentes, **caractérisée en ce qu'**au moins un des guidages dudit système de poussée secondaire (200) sur la partie de support (52) est situé au-dessus du, et sur le, côté intérieur de la zone de travail (AL).

11. Machine de coupe de panneaux (10) selon une quelconque des revendications précédentes, **caractérisée en ce que** le système de guidage dudit système de poussée secondaire (200) sur la partie de support (52) est situé au-dessus du, et sur le, côté intérieur de la zone de travail (AL).

12. Machine de coupe de panneaux (10) selon une quelconque des revendications précédentes, **caractérisée en ce que** le système de poussée secondaire (200) est pourvu d'un chariot (201) capable de se déplacer sur des guidages fixes (202) situés sur la partie de support (52) de la structure de support (50) ; ledit chariot (201), à son tour, est pourvu des moyens de poussée et/ou de serrage (PZ2).

13. Machine de coupe de panneaux (10) selon une quelconque des revendications précédentes, **caractérisée en ce que** le système de poussée secondaire (200) est pourvu des moyens de poussée et/ou de serrage (PZ2) pour serrer et transporter pour mesurer un second empilement de panneaux qui peut être coupé simultanément et indépendamment du premier empilement de panneaux déplacé avec les moyens de poussée et/ou de serrage (PZ1) du premier système de poussée (100).

14. Machine de coupe de panneaux (10) selon une quelconque des revendications précédentes, **caractérisée en ce que** les moyens de poussée et/ou de serrage (PZ1), par rapport au premier système de poussée (100), peuvent être individuellement levés, en fonction du cycle de travail destiné à être exécuté sur le premier empilement de panneaux.

15. Machine de coupe de panneaux (10) selon une quelconque des revendications précédentes, **caractérisée en ce que** les moyens de poussée et/ou de serrage (PZ2), par rapport au système de poussée secondaire (200), peuvent être individuellement levés, en fonction du cycle de travail destiné à être exécuté sur le second empilement de panneaux.
